# EUROPÄISCHE PATENTSCHRIFT

(11) **EP 3 592 792 B1**
(45) Veröffentlichungstag und Bekanntmachung des Hinweises auf die Patenterteilung: **16.12.2020**
(21) Anmeldenummer: 18708436.3
(22) Anmeldetag: 08.03.2018
(51) Int. Cl.: C08G 18/48, B01J 13/02, C08G 18/79, C08G 18/22, C08G 18/24, C08K 9/10

(54) **MIKROVERKAPSELTER POLYADDITIONSKATALYSATOR**
MICROENCAPSULATED POLYADDITION CATALYST
CATALYSEUR DE POLYADDITION MICRO-ENCAPSULÉ

(30) Priorität: 09.03.2017 EP 17160135
(43) Veröffentlichungstag der Anmeldung: 15.01.2020
(73) Patentinhaber: Construction Research & Technology GmbH, 83308 Trostberg (DE)
(72) Erfinder: WOELFLE, Heimo, 83278 Traunstein (DE); STAFF, Roland Hinrich, 67056 Ludwigshafen (DE); BRANDT, Kristina, 83308 Trostberg (DE); LOPEZ VILLANUEVA, Francisco Javier, 67056 Ludwigshafen (DE)
(86) Internationale Anmeldenummer: PCT/EP2018/055701
(87) Internationale Veröffentlichungsnummer: WO 2018/162615

(56) Entgegenhaltungen:
- EP-A2- 0 839 902
- DE-A1- 4 321 205
- DE-A1- 19 932 144
- ANN-CHRISTIN BIJLARD ET AL: "A Nanocapsule-Based Approach Toward Physical Thermolatent Catalysis", ADVANCED MATERIALS, Bd. 28, Nr. 30, 11. Mai 2016 (2016-05-11), Seiten 6372-6377, XP055394627, DE ISSN: 0935-9648, DOI: 10.1002/adma.201600830 in der Anmeldung erwähnt

## Beschreibung

Die vorliegende Erfindung betrifft einen mikroverkapselten Polyadditionskatalysator, ein Verfahren zu seiner Herstellung und dessen Verwendung.

In der Bau- und Fertigungsindustrie erfolgt das Fixieren von Bauteilen oder die Beschichtung von Oberflächen oft unter Verwendung chemisch härtender Harze, die als Ein- oder Zwei-Komponentensysteme vorliegen. Bei der Anwendung dieser Harze ist eine Optimierung der Aushärtezeit wünschenswert, die sich aus zwei Zeitpunkten zusammensetzt. Die so genannte Offenzeit (auch Gel- oder Topfzeit genannt) ist der Zeitraum, der eine unbeeinflusste Verarbeitung des Reaktivsystems erlaubt, während die Trockenzeit den Zeitpunkt der klebfreien Aushärtung wiedergibt. Die Topfzeit sollte einerseits möglichst groß sein, um beispielsweise ein rationelles Arbeiten durch großflächiges Auftragen des Harzes und gegebenenfalls anschließendes Fügen von Bauteilen in einer für den Vorgang erforderlichen Zeit zu ermöglichen. Auf der anderen Seite sollte die Aushärtezeit möglichst klein sein, damit die Verbindungen rasch aushärten, die Bauteile sich nicht verschieben, nachträgliche Verschmutzungen vermieden und/oder frühere Verwendung, wie z.B. Begehbarkeit von Bodenbeschichtungen, ermöglicht wird.

Die Härtung von Harzen erfolgt üblicherweise unter Verwendung von Katalysatoren, die eine Polymerisationsreaktion, wie eine Polyadditionsreaktion, zwischen den reaktiven Harzkomponenten katalysieren. Bei den meisten herkömmlichen Harzsystemen beobachtet man einen kontinuierlichen Anstieg der Viskosität, wobei die Offenzeit oftmals schon nach einer für den Verarbeiter ungünstig kurzen Zeit erreicht wird und sich die Trockenzeit dennoch unerwünscht lange hinzieht.

Es ist bereits versucht worden, Polyadditionskatalysatoren zu verkapseln, so dass die Freisetzung des Katalysators verzögert erfolgt und erst auf die Freisetzung des Katalysators eine schnelle Durchhärtung erfolgt. Durch die Beschaffenheit der Kapseln hinsichtlich Größe, Art und Dicke der Wand etc. kann man die Zeit bis zur Freisetzung, d.h. die Offenzeit, definieren und optimieren.

Adv. Mater. 2016, DOI: 10.1002/adma.201600830 beschreibt die Herstellung thermolatenter Katalysator-Nanokapseln. Der Kapselkern besteht aus Isooctan und Dimethylzinn-neodecanoat, die Kapselhülle aus Poly(methylmethacrylat-co-Butylmethacrylat-co-Methacrylsäure), welches über Butandioldimethacrylat vernetzt ist.

Die Kapseln werden nach einer Miniemulsionstechnik hergestellt. Als Stimulus für die Katalysatorfreisetzung ist nur die thermische Öffnung der Kapseln beschrieben, was den Einsatz bei Umgebungstemperatur z B. in Bodenbeschichtungen oder Dichtmembranen verbietet.

Der vorliegenden Erfindung liegt die Aufgabe zugrunde, mikroverkapselte Polyadditionskatalysatoren bereitzustellen, die durch einen chemischen Stimulus, z. B. bei Kontakt mit Isocyanat-härtenden Substanzen wie Polyolen oder Wasser, freigesetzt werden.

Die Aufgabe wird gelöst durch einen mikroverkapselten Polyadditionskatalysator, der einen Polyadditionskatalysator enthaltenden Kapselkern und ein Acrylcopolymer als Kapselhülle umfasst, wobei das Acrylcopolymer einpolymerisierte Einheiten eines intermolekularen Anhydrids einer ethylenisch ungesättigten Carbonsäure enthält. Der Polyadditionskatalysator ist ausgewählt unter acyclischen tertiären Aminen, alicyclischen tertiären Aminen, N-Alkylimidazolen, Phosphinen und organischen Metallsalzen.

Die einpolymerisierten Einheiten des intermolekularen Anhydrids einer ethylenisch ungesättigten Carbonsäure wirken als temporäre Vernetzer, deren vernetzende Wirkung durch Solvolyse der Anhydridbindung in der Anwendungsumgebung aufgehoben wird, wodurch die Kapselhülle destabilisiert und der Kapselinhalt mit dem Polyadditionskatalysator freigesetzt wird.

Die mittlere Teilchengröße D(0,5) der erfindungsgemäß eingesetzten Mikrokapseln (volumengewichtetes Mittel, bestimmt mittels Lichtstreuung) beträgt vorzugsweise 1 bis 50 µm, bevorzugt 1 bis 20 µm, insbesondere von 2 bis 10 µm. D(0,5) ist dabei als der Teilchendurchmesser definiert, bei dem ein kumuliertes Teilchenvolumen von 50% erreicht ist. Kapseln mit diesem Durchmesser weisen ausreichende mechanische Stabilität auf, damit man sie unbeschadet handhaben und in die zu härtenden Massen einarbeiten kann. Die Größe ist so gewählt, dass der unbeabsichtigte Bruch einzelner Kapseln toleriert werden kann, da der unbeabsichtigte Bruch einzelner Kapseln nur eine geringe Menge an Polyadditionskatalysator freisetzt, die nicht zum vorzeitigen Härten der Massen führt. Andererseits wird durch ein gut handhabbares Volumen an Kapseln eine zur vollständigen Härtung ausreichende Katalysatormenge eingebracht.

In bestimmten Ausführungsformen liegt der mikroverkapselte Polyadditionskatalysator als trockenes Pulver, Granulat oder Agglomerat vor.

Das Gewichtsverhältnis von Kapselkern zu Kapselhülle beträgt im Allgemeinen von 50:50 bis 95:5, bevorzugt von 60:40 bis 94:6, insbesondere bevorzugt von 70:30 bis 93:7.

Als Polyadditionskatalysatoren können in der Polyurethanchemie üblicherweise verwendete Urethanisierungskatalysatoren eingesetzt werden. Dies sind Verbindungen, die die Reaktion der reaktiven Wasserstoffatome Isocyanat-reaktiver Komponenten mit den organischen Polyisocyanaten beschleunigen.

Als Polyadditionskatalysatoren in Betracht kommen acyclische tertiäre Amine, alicyclische tertiäre Amine, N-Alkylimidazole, Phosphine und organische Metallsalze.

Acyclische tertiäre Amine sind Verbindungen, die über wenigstens eine tertiäre Aminfunktion verfügen, die nicht Bestandteil einer cyclischen Struktur ist. Hierzu zählen beispielsweise Triethylamin, Tributylamin, N,N-Dimethylcyclohexylamin (DMCHA), N-Methyldicyclohexylamin, N,N-Dimethylbenzylamin (BDMA), N,N-Dimethylaminopropylamin, Bis-(dimethylaminopropyl)amin, N,N-Dimethylaminopropyl-N'-methylethanolamin, Dimethylaminoethoxyethanol, Bis-(dimethylaminopropyl)amino-2-propanol, N,N-Dimethylaminopropyl-dipropanolamin, N,N,N'-Trimethyl-N'-hydroxyethyl-bisaminoethyl-ether, N,N-Dimethylaminopropylharnstoff, N,N,N',N'-Tetramethylethylendiamin, N,N,N',N'-Tetramethylbutylendiamin, N,N,N',N'-Tetramethyl-1,6-hexylendiamin, N,N,N',N",N"-Pentamethyldiethylentriamin (PMDETA), N,N,N',N",N"-Pentamethyldipropylentriamin (PMDPTA), N,N,N-Tris-(3-dimethylaminopropyl)-amin, Bis-(2-dimethylaminoethyl)-ether (BDMAEE), Bis-(dimethylaminopropyl)-harnstoff, 2,4,6-Tris(dimethylaminomethyl)phenol, sowie dessen Salz mit 2-Ethylhexansäure und deren Isomeren; sowie Tris-(dialkylaminoalkyl)-s-hexahydrotriazine wie 1,3,5-Tris(3-[dimethylamino]propyl)-hexahydro-triazin.

Alicyclische tertiäre Amine sind Verbindungen, die über wenigstens eine tertiäre Aminfunktion verfügen, die Bestandteil einer nicht-aromatischen cyclischen Struktur ist. Hierzu zählen beispielsweise 1,4-Dimethylpiperazin (DMP), 1-Methyl-4-(2-dimethylaminoethyl)piperazin, 1-Aza-bicyclo-[3.3.0]-octan, 1,4-Diaza-bicyclo-[2.2.2]-octan (DABCO), 1,8-Diazabicyclo[5.4.0]undec-7-en (DBU), 1,5-Diazabicyclo[4.3.0]non-7-en (DBN), N-Methylmorpholin, N-Ethylmorpholin, N-Cyclohexylmorpholin und 2,2'-Dimorpholinodiethylether (DMDEE).

Zu geeigneten N-Alkylimidazolen zählen N-Methylimidazol, 1,2-Dimethylimidazol, N-(2-Hydroxypropyl)-imidazol, N-(2-Hydroxyethyl)-imidazol und N-(2-Aminopropyl)-imidazol.

Als Polyadditionskatalysatoren in Betracht kommende Phosphine sind vorzugsweise tertiäre Phosphine, wie Triphenylphosphin oder Methyldiphenylphosphin.

Als Polyadditionskatalysatoren in Betracht kommende organische Metallsalze weisen vorzugsweise die allgemeine Formel

LₘMⁿ⁺ nA⁻

auf, worin
der Ligand L ein organischer Rest oder eine organische Verbindung ist ausgewählt unter Alkyl, Alkenyl, Alkinyl, Aryl, Arylalkyl, Alkylaryl, Heteroaryl, Heteroarylalkyl, Alkylheteroaryl und Acyl, wobei der Ligand L 1 bis 20 C-Atome aufweist, und wobei die m Liganden L gleich oder verschieden sein können,
m gleich 0, 1, 2, 3, 4, 5 oder 6 ist,
M für ein Metall steht,
n gleich 1, 2, 3 oder 4 ist, und
das Anion A⁻ für ein Carboxylat-Ion, Alkoxylat-Ion oder Enolat-Ion steht.

Vorzugsweise ist das Metall M ausgewählt unter Lithium, Kalium, Cäsium, Magnesium, Calcium, Strontium, Barium, Bor, Aluminium, Indium, Zinn, Blei, Bismut, Cer, Cobalt, Eisen, Kupfer, Lanthan, Mangan, Quecksilber, Scandium, Titan, Zink und Zirkonium; insbesondere unter Lithium, Kalium, Cäsium, Zinn, Bismut, Titan, Zink und Zirkonium.

Vorzugsweise steht der Ligand L für Alkyl mit 1 bis 20 C-Atomen. Besonders bevorzugt steht L für Alkyl mit 1 bis 10 C-Atomen, insbesondere 1 bis 4 C-Atomen, z.B. Methyl, Ethyl, n-Propyl, iso-Propyl, n-Butyl, iso-Butyl, sec-Butyl oder tert-Butyl.

Vorzugsweise weist das Carboxylat-Ion die Formel R¹-COO- auf, wobei R¹ ausgewählt ist unter H, Alkyl, Alkenyl, Alkinyl, Aryl, Arylalkyl, Alkylaryl, Heteroaryl, Heteroarylalkyl, Alkylheteroaryl und Acyl, und wobei der Rest R¹ bis zu 20 C-Atome aufweist, vorzugsweise 6 bis 20 C-Atome. Besonders bevorzugte Carboxylat-Ionen sind ausgewählt unter den Anionen natürlicher und synthetischer Fettsäuren, wie Neodecanoat, Isooctanoat und Laurat, und den Anionen von Harzsäuren und Naphthensäuren.

Vorzugsweise weist das Enolat-Ion die Formel R²CH=CR³-O- auf, wobei R² und R³ jeweils ausgewählt sind unter H, Alkyl, Alkenyl, Alkinyl, Aryl, Arylalkyl, Alkylaryl, Heteroaryl, Heteroarylalkyl, Alkylheteroaryl und Acyl, und wobei die Reste R² und R³ jeweils bis zu 20 C-Atome aufweisen. Spezifische Beispiele sind Ethylacetonat, Heptylacetonat oder Phenylacetonat. Vorzugsweise leitet sich das Enolat-Ion von einem 1,3-Diketon mit fünf bis acht C-Atomen ab. Als Beispiele lassen sich anführen Acetylacetonat, das Enolat von 2,4-Hexandion, das Enolat von 3,5-Heptandion und das Enolat von 3,5-Octandion.

Vorzugsweise weist das Alkoxylat-Ion die Formel R⁴-O⁻ auf, wobei R⁴ ausgewählt ist unter Alkyl, Alkenyl, Alkinyl, Aryl, Arylalkyl, Alkylaryl, Heteroaryl, Heteroarylalkyl, Alkylheteroaryl und Acyl, und wobei der Rest R⁴ bis zu 20 C-Atome aufweist.

In bestimmten Ausführungsformen ist die organische Metallverbindung ausgewählt unter
Alkalicarboxylaten, wie Lithium-ethylhexanoat, Lithium-neodecanoat, Kaliumacetat, Kalium-ethylhexanoat, Cäsium-ethylhexanoat;
Erdalkalicarboxylaten, wie Calcium-ethylhexanoat, Calciumnaphthenat, Calciumoctoat (erhältlich als Octa-Soligen® Calcium von OMG Borchers), Magnesiumstearat, Strontium-ethylhexanoat, Barium-ethylhexanoat, Bariumnaphthenat, Bariumneodecanoat;
Aluminiumverbindungen, wie Aluminiumacetylacetonat, Aluminiumdionat (z.B. K-KAT® 5218 der Firma King Industries);
Zinkverbindungen, beispielsweise Zink(II)-diacetat, Zink(II)-ethylhexanoat und Zink-(II)-octoat, Zinkneodecanoat, Zinkacetylacetonat;
Zinnverbindungen, wie Zinn(II)-carboxylaten, beispielsweise Zinn(II)-acetat, Zinn(II)-octoat, Zinn(II)-ethylhexanoat, Zinn(II)-neodecanoat, Zinn(II)-isononanoat, Zinn(II)-laurat und
Dialkylzinn(IV)-salzen von organischen Carbonsäuren, beispielsweise Dimethylzinndiacetat, Dibutylzinn-diacetat, Dibutylzinn-dibutyrat, Dibutylzinn-bis(2-ethylhexanoat), Dibutylzinn-dilaurat, Dibutylzinn-maleat, Dioctylzinn-dilaurat und Dioctylzinn-diacetat, insbesondere Dibutylzinn-dilaurat;
Titanverbindungen, wie Tetra-(2-ethylhexyl)titanat;
Zirconiumverbindungen, wie Zirkonium-ethylhexanoat, Zirconium-neodecanoat, Zirconiumacetylacetonat (z.B. K-KAT® 4205 der Firma King Industries); Zirkoniumdionate (z.B. K-KATO XC-9213; XC-A209 und XC-6212 der Firma King Industries); Zirkon-2,2,6,6-tetramethyl-3,5-heptandionat;
Bismutverbindungen, wie Bismut-carboxylaten, insbesondere Bismut-octoat, Bismutethylhexanoat, Bismut-neodecanoat oder Bismut-pivalat (z.B. K-KAT® 348, XC-B221; XC-C227, XC 8203 der Firma King Industries, TIB KAT 716, 716LA, 716XLA, 718, 720, 789 von TIB Chemicals und solche von Shepherd Lausanne);
Mangansalzen, wie Mangan-neodecanoat, Mangan-naphthenat;
Cobaltsalzen, wie Cobalt-neodecanoat, Cobalt-ethylhexanoat, Cobalt-naphthenat;
Eisensalzen, wie Eisen-ethylhexanoat;
Quecksilberverbindungen, wie Phenylquecksilbercarboxylat.

Bevorzugte organische Metallverbindungen sind Dibutylzinn-dilaurat, Dioctylzinn-dilaurat, Zink(II)-diacetat, Zink(II)-dioctoat, Zirconiumacetylacetonat und Zirkon-2,2,6,6-tetramethyl-3,5-heptandionat, Bismutneodecanoat, Bismutdioctoat und Bismutethylhexanoat.

Vorzugsweise umfasst der Kapselkern neben dem Polyadditionskatalysator ein hydrophobes Kernmaterial. Die Mitverwendung eines hydrophoben Kernmaterials gestattet die Herstellung wohldefinierter Kapseln einheitlicher Größenverteilung und erleichtert die Verteilung des freigesetzten Polyadditionskatalysators im Anwendungsmedium, sobald die Kapselhülle geöffnet ist.

Vorzugsweise entfallen auf den Polyadditionskatalysator 10 bis 100 Gew.-%, z.B. 20 bis 90 Gew.-%, insbesondere 30 bis 70 Gew.-%, bezogen auf das Gesamtgewicht von Polyadditionskatalysator und hydrophobem Kernmaterial.

Hydrophobe Kernmaterialien sind beispielsweise aliphatische Kohlenwasserstoffe, aromatische Kohlenwasserstoffe, halogenierte Kohlenwasserstoffe, gesättigte oder ungesättigte C₆-C₃₀-Fettsäuren, Fettalkohole, Oxoalkohole, Ether von Fettalkoholen, C₆-C₃₀-Fettamine, Fettsäureester, Triglyceride, Ester aliphatischer oder aromatischer Polycarbonsäuren, natürliche und synthetische Wachse und Trialkylphosphorsäureester. Die hydrophoben Kernmaterialien können auch als Gemische zweier oder mehrerer Substanzen eingesetzt werden.

Als geeignete Substanzen sind beispielhaft zu nennen:
- aliphatische Kohlenwasserstoffe, wie gesättigte oder ungesättigte C₁₀-C₄₀-Kohlenwasserstoffe, die verzweigt oder bevorzugt linear sind, wie n-Tetradecan, n-Pentadecan, n-Hexadecan, n-Heptadecan, n-Octadecan, n-Nonadecan, n-Eicosan, n-Heneicosan, n-Docosan, n-Tricosan, n-Tetracosan, n-Pentacosan, n-Hexacosan, n-Heptacosan, n-Octacosan sowie cyclische Kohlenwasserstoffe, z. B. Cyclohexan, Cyclooctan, Cyclodecan;
- aromatische Kohlenwasserstoffe, wie Benzol, Naphthalin, Biphenyl, o- oder m-Terphenyl, C₁-C₄₀-alkylsubstituierte aromatische Kohlenwasserstoffe wie Dodecylbenzol, Tetradecylbenzol, Hexadecylbenzol, Hexylnaphthalin oder Decylnaphthalin;
- halogenierte Kohlenwasserstoffe wie Chlorparaffin, Bromoctadecan, Brompentadecan, Bromnonadecan, Bromeicosan, Bromdocosan;
- gesättigte oder ungesättigte C₆-C₃₀-Fettsäuren wie Laurin-, Stearin-, Öl- oder Behensäure;
- Fettalkohole wie Lauryl-, Stearyl-, Oleyl-, Myristyl-, Cetylalkohol, Gemische wie Kokosfettalkohol sowie die sogenannten Oxoalkohole, die man durch Hydroformylierung von α-Olefinen und weiteren Umsetzungen erhält;
- C₆-C₃₀-Fettamine, wie Decylamin, Dodecylamin, Tetradecylamin oder Hexadecylamin;
- Fettsäureester wie C₁-C₁₀-Alkylester von Fettsäuren wie Propylpalmitat, Methylstearat oder Methylpalmitat sowie bevorzugt ihre eutektischen Gemische oder Methylcinnamat;
- Triglyceride der geradlinigen und verzweigten C₃-C₂₁ Carbonsäuren, wie Olivenöl, Sojaöl, Maisöl, Baumwollsaatöl, Sonnenblumenöl, Erdnußöl, Palmöl, Kokosnußöl und Weizenkeimöl;
- Ester aliphatischer oder aromatischer Polycarbonsäuren, insbesondere Ester der Adipinsäure, Sebacinsäure, Bernsteinsäure, Citronensäure, Acetylcitronensäure, Cyclohexan-1,2-dicarbonsäure oder Phthalsäure, wie Di-2-ethylhexyladipat, Di-n-hexyladipat, Di-n-octyladipat, Diisooctyladipat, Di-n-decyladipat, Diisodecyladipat, Ethylhexylsebacat, Di-isodecylsebacat, Di-n-butylphthalat, Di-n-octylphthalat, Di-n-hexylphthalat, Di-n-decylphthalat, Dicyclohexylphthalat, Diisodecylphthalat, Butylcyclohexylphthalat, Diisooctylphthalat, Isooctylisodecylphthalat;
- natürliche und synthetische Wachse wie Montansäurewachse, Montanesterwachse, Carnaubawachs, Polyethylenwachs, oxidierte Wachse, Polyvinyletherwachs, Ethylenvinylacetatwachs oder Hartwachse nach Fischer-Tropsch-Verfahren;
- Trialkylphosphorsäureester, wie Trimethylphosphat.

Davon sind Ester aliphatischer oder aromatischer Polycarbonsäuren, insbesondere Adipinsäureester, 1,2-Cyclohexandicarbonsäureester, Phthalsäureester, Triglyceride und Trialkylphosphorsäureester wegen ihrer leichten Verfügbarkeit und Kompatibilität mit den zu härtenden Massen im Allgemeinen bevorzugt. Ein besonders bevorzugtes hydrophobes Kernmaterial ist 1,2-Cyclohexandicarbonsäurediisononylester.

Das die Kapselhülle aufbauende Acrylcopolymer enthält einpolymerisierte Einheiten eines intermolekularen Anhydrids einer ethylenisch ungesättigten Carbonsäure, insbesondere eines intermolekularen Anhydrids einer ethylenisch ungesättigten C₃-C₁₂-Carbonsäure, besonders bevorzugt eines intermolekularen Anhydrids einer ethylenisch ungesättigten C₃-C₈-Carbonsäure. Unter einem intermolekularen Säureanhydrid wird ein solches verstanden, das bei der Spaltung der Anhydridbindung zwei Säuremoleküle liefert. Bei dem intermolekularen Anhydrid kann es sich um symmetrische oder unsymmetrische Anhydride der ethylenisch ungesättigten Carbonsäuren handeln. Geeignete ethylenisch ungesättigte Carbonsäuren sind beispielsweise Acrylsäure, Methacrylsäure, Ethylacrylsäure, Allylessigsäure, Crotonsäure, Vinylessigsäure, Vinylbenzoesäure. Es kommen auch die symmetrischen oder unsymmetrischen Anhydride von Halbestern ethylenisch ungesättigter Dicarbonsäuren untereinander oder mit ethylenisch ungesättigten Monocarbonsäuren in Betracht. Bevorzugt sind Acrylsäureanhydrid, Methacrylsäureanhydrid und 4-Vinylbenzoesäureanhydrid, wovon Methacrylsäureanhydrid am meisten bevorzugt ist.

Neben den Einheiten eines intermolekularen Anhydrids einer ethylenisch ungesättigten Carbonsäure enthält das Acrylcopolymer in der Regel einpolymerisierte Einheiten eines oder mehrerer davon verschiedener ethylenisch ungesättigter Monomere.

Im Allgemeinen ist das Acrylcopolymer aufgebaut aus Einheiten von
(a) 5 bis 50 Gew.-%, vorzugsweise 10 bis 30 Gew.-%, wenigstens eines intermolekularen Anhydrids einer ethylenisch ungesättigten C₃-C₁₂-Carbonsäure,
(b) 30 bis 90 Gew.-%, vorzugsweise 35 bis 80 Gew.-%, wenigstens eines unter C₁-C₂₄-Alkylestern der Acrylsäure, C₁-C₂₄-Alkylestern der Methacrylsäure und Vinylaromaten ausgewählten Monomers,
(c) 5 bis 20 Gew.-%, vorzugsweise 10 bis 15 Gew.-%, wenigstens eines Monomers, das wenigstens zwei ethylenische Unsättigungen aufweist, und
(d) 0 bis 30 Gew.-%, vorzugsweise 0 bis 20 Gew.-%, eines oder mehrerer sonstiger Monomere, jeweils bezogen auf das Gesamtgewicht der Monomere.

Bevorzugte Monomere (a) sind die oben genannten, insbesondere Acrylsäureanhydrid, Methacrylsäureanhydrid und 4-Vinylbenzoesäureanhydrid, wovon Methacrylsäureanhydrid am meisten bevorzugt ist.

Als Monomere (b) eignen sich C₁-C₂₄-Alkylester der Acryl- und/oder Methacrylsäure. Geeignete Monomere (b) sind iso-Propyl-, iso-Butyl-, sec-Butyl- und tert-Butylacrylat und die entsprechenden Methacrylate, sowie besonders bevorzugt Methyl-, Ethyl-, n-Propyl- und n-Butylacrylat und die entsprechenden Methacrylate. Generell werden die Methacrylate bevorzugt. Als Monomere (b) sind weiterhin Vinylaromaten, wie Styrol oder α-Methylstyrol, geeignet.

In bestimmten Ausführungsformen umfassen die Monomere (b) eine Kombination wenigstens eines Monomers mit einer Glasübergangstemperatur Tg von 70 °C oder mehr mit wenigstens einem Monomer mit einer Glasübergangstemperatur Tg von 50 °C oder weniger. Ein bevorzugtes Monomer mit einer Glasübergangstemperatur Tg von 70 °C oder mehr ist Methylmethacrylat; ein bevorzugtes Monomer mit einer Glasübergangstemperatur Tg von 50 °C oder weniger ist n-Butylacrylat oder n-Butylmethacrylat.

Monomere (c) weisen wenigstens zwei ethylenische Unsättigungen auf. Sie bewirken eine Vernetzung der Kapselhülle während der Polymerisation und verleihen der Kapselhülle mechanische Stabilität. Geeignete Monomere (c) sind ethylenisch ungesättigte Monomere, die zwei, drei, vier oder mehr nichtkonjugierte ethylenische Unsättigungen aufweisen. Bevorzugt werden Monomere mit Vinyl-, Allyl-, Acryl- und/oder Methacrylgruppen verwendet. Bevorzugt werden Monomere, welche in Wasser nicht löslich oder schwer löslich sind, aber eine gute bis begrenzte Löslichkeit in der lipophilen Substanz haben. Unter Schwerlöslichkeit ist eine Löslichkeit kleiner 60 g/l bei 20 °C zu verstehen.

Geeignete Monomere mit zwei ethylenischen Unsättigungen sind Divinylbenzol und Divinylcyclohexan; die Diester von Diolen mit Acrylsäure oder Methacrylsäure, ferner die Diallyl- und Divinylether dieser Diole. Beispielhaft seien Ethandioldiacrylat, Ethylenglykoldimethacrylat, 1,3-Butylenglykoldimethacrylat, Methallylmethacrylamid, Allylacrylat und Allylmethacrylat genannt. Besonders bevorzugt sind Propandiol-, Butandiol-, Pentandiol- und Hexandioldiacrylat und die entsprechenden Methacrylate.

Bevorzugte Monomere mit drei, vier oder mehr nichtkonjugierten ethylenischen Unsättigungen sind die Ester von Mehrfachalkoholen mit Acrylsäure und/oder Methacrylsäure, ferner die Allyl- und Vinylether dieser Mehrfachalkohole, Trivinylbenzol und Trivinylcyclohexan. Als Mehrfachalkohole seien dabei insbesondere Trimethylol und Pentaerythrit genannt. Besonders bevorzugt werden Trimethylolpropantriacrylat und -methacrylat, Pentaerythrittriallylether, Pentaerythrittetraallylether, Pentaerythrittriacrylat und Pentaerythrittetraacrylat sowie ihre technischen Mischungen. So liegt Pentaerythrittetraacrylat in der Regel in technischen Mischungen im Gemisch mit Pentaerythrittriacrylat und geringeren Mengen Oligomerisierungsprodukten vor.

Besonders bevorzugte Monomere (c) sind 1,4-Butandioldiacrylat, Pentaerythrittriacrylat, Pentaerythrittetraacrylat und Triethylenglycoldimethacrylat.

Als optionale Monomere (d) kommen sonstige Monomere in Betracht, die von den Monomeren (a) bis (c) verschieden sind, wie Vinylacetat, Vinylpropionat, Vinylpyridin, Acrylsäure, Methacrylsäure, Maleinsäure, Itaconsäure, Vinylphosphonsäure, Maleinsäureanhydrid, 2-Hydroxyethylacrylat und -methacrylat, Acrylamido-2-methylpropansulfonsäure, Methacrylnitril, Acrylnitril, Methacrylamid, N-Vinylpyrrolidon, N-Methylolacrylamid, N-Methylolmethacrylamid, Dimethylaminoethylmethacrylat und Diethylaminoethylmethacrylat.

Das Acrylcopolymer ist auf verschiedene Weise erhältlich, wird aber vorzugsweise durch freie radikalische Suspensionspolymerisation in einer Öl-in-Wasser-Emulsion oder Wasser-in-ÖI-Emulsion erhalten. Die Wahl zwischen einer Öl-in-Wasser-bzw. Wasser-in-ÖI-Fahrweise wird der Fachmann nach der Hydrophilie bzw. Lipophilie des zu verkapselnden Katalysators treffen.

Ein Verfahren zur freien radikalischen Suspensionspolymerisation in einer Wasser-in-Öl-Emulsion ist z.B. beschrieben in WO 2013/092158 und WO 2014/198531, auf die vollinhaltlich verwiesen wird.

Vorzugsweise sind die Mikrokapseln durch Polymerisation eines die Kapselhülle konstituierenden Monomergemisches in der Ölphase einer stabilen Öl-in-Wasser-Emulsion erhältlich, wobei die Ölphase aus einem hydrophoben Material besteht, das einen Polyadditionskatalysator enthält. Dieses Herstellungsverfahren ist an sich bekannt und z. B. in DE 4321205 oder WO 2014/127951 beschrieben.

Der Kern der Mikrokapseln wird von einem in Wasser emulgierbaren hydrophoben Material gebildet. Das hydrophobe Material dient gleichzeitig als Lösungs- oder Dispergiermittel für das bei der Herstellung der Kapselhüllen durch Polymerisation eingesetzte Monomergemisch. Die Polymerisation findet dann in der Ölphase einer stabilen Öl-in-Wasser-Emulsion statt. Diese Emulsion erhält man, indem man beispielsweise zunächst die Monomeren und den Polymerisationsinitiator sowie gegebenenfalls einen Polymerisationsregler in dem hydrophoben Material löst und die so erhaltene Lösung in einem wässrigen Medium mit einem Emulgator und/oder Schutzkolloid emulgiert. Man kann jedoch auch zunächst die hydrophobe Phase oder Bestandteile davon in der wässrigen Phase emulgieren und dann zur Emulsion die Monomeren oder den Polymerisationsinitiator sowie die gegebenenfalls noch mitzuverwendenden Hilfsstoffe, wie Schutzkolloide oder Polymerisationsregler zugeben. Bei einer anderen Verfahrensvariante kann man auch das hydrophobe Material und die Monomeren in Wasser emulgieren und anschließend nur noch den Polymerisationsinitiator zugeben. Da das hydrophobe Material in der Emulsion möglichst vollständig mikroverkapselt werden soll, werden vorzugsweise nur solche hydrophobe Materialien eingesetzt, deren Löslichkeit in Wasser begrenzt ist. Die Löslichkeit sollte vorzugsweise 5 Gew.-% bei 25 °C nicht übersteigen. Für eine vollständige Verkapselung des hydrophoben Materials in der Ölphase der Öl-in-Wasser-Emulsion ist es zweckmäßig, die Monomeren entsprechend ihrer Löslichkeit im hydrophoben Material auszuwählen. Während die Monomeren im Öl im Wesentlichen löslich sind, entstehen daraus bei der Polymerisation in den einzelnen Öltröpfchen Oligo- und Polymere, die weder in der Ölphase noch in der Wasserphase der Öl-in-Wasser-Emulsion löslich sind und an die Grenzfläche zwischen den Öltröpfchen und der Wasserphase wandern. Dort bilden sie im Verlauf der weiteren Polymerisation das Wandmaterial, das schließlich das hydrophobe Material als Kern der Mikrokapseln umhüllt.

Zur Ausbildung einer stabilen Öl-in-Wasser-Emulsion werden in der Regel Schutzkolloide und/oder Pickering-Stabilisatoren mitverwendet. Sowohl Schutzkolloide als auch Pickering-Stabilisatoren können ionisch oder neutral sein. Schutzkolloide und Pickering-Stabilisatoren können dabei sowohl einzeln als auch in Mischungen mehrerer gleich oder unterschiedlich geladener Vertreter eingesetzt werden.

Schutzkolloide sind bevorzugt wasserlösliche Polymere, die die Oberflächenspannung des Wassers von 73 mN/m maximal auf 45 bis 70 mN/m senken und somit die Ausbildung geschlossener Kapselwände gewährleisten.

Anionische Schutzkolloide sind Natriumalginat, Polymethacrylsäure und ihre Copolymerisate, die Copolymerisate des Sulfoethylacrylats und -methacrylats, des Sulfopropylacrylats und -methacrylats, des N-(Sulfoethyl)-maleinimids, der 2-Acrylamido-2-alkylsulfonsäuren, Styrolsulfonsäure sowie der Vinylsulfonsäure. Bevorzugte anionische Schutzkolloide sind Naphthalinsulfonsäure und Naphthalinsulfonsäure-Formaldehyd-Kondensate sowie vor allem Polyacrylsäuren und Phenolsulfonsäure-Formaldehyd-Kondensate.

Neutrale Schutzkolloide sind beispielsweise Cellulosederivate wie Hydroxyethylcellulose, Methylhydroxyethylcellulose, Methylcellulose und Carboxymethylcellulose, Polyvinylpyrrolidon, Copolymere des Vinylpyrrolidons, Gelatine, Gummiarabicum, Xanthan, Kasein, Polyethylenglykole, Polyvinylalkohol und partiell hydrolysierte Polyvinylacetate sowie Methylhydroxypropylcellulose. Bevorzugte neutrale Schutzkolloide sind Polyvinylalkohol und partiell hydrolysierte Polyvinylacetate sowie Methylhydroxy(C₁-C₄)-alkylcellulose.

Unter Methylhydroxy-(C₁-C₄)-alkylcellulose sind Methylhydroxy-(C₁-C₄)-alkylcellulosen unterschiedlichster Methylierungsgrade wie auch Alkoxylierungsgrade zu verstehen. Die bevorzugten Methylhydroxy-(C₁-C₄)-alkylcellulosen besitzen einen durchschnittliche Substitutionsgrad DS von 1,1 bis 2,5 und einen molaren Substitutionsgrad MS von 0,03 bis 0,9.

Geeignete Methylhydroxy-(C₁-C₄)-alkylcellulosen sind beispielsweise Methylhydroxyethylcellulose oder Methylhydroxypropylcellulose. Besonders bevorzugt wird Methylhydroxypropylcellulose. Derartige Methylhydroxy-(C₁-C₄)-alkylcellulosen sind beispielsweise unter den Handelsnamen Culminal® der Firma Hercules/Aqualon erhältlich.

Pickering-Stabilisatoren sind anorganische feste Partikel. Ein solches Pickering-System kann dabei aus den festen Teilchen allein oder zusätzlich aus Hilfsstoffen bestehen, die die Dispergierbarkeit der Partikel in Wasser oder die Benetzbarkeit der Partikel durch die lipophile Phase verbessern. Die Wirkweise und ihr Einsatz ist in der EP-A-1 029 018 sowie der EP-A-1 321 182 beschrieben, auf deren Inhalte ausdrücklich Bezug genommen wird.

Die anorganischen festen Partikel können Metallsalze sein, wie Salze, Oxide und Hydroxide von Calcium, Magnesium, Eisen, Zink, Nickel, Titan, Aluminium, Silicium, Barium und Mangan. Zu nennen sind Magnesiumhydroxid, Magnesiumcarbonat, Magnesiumoxid, Calciumoxalat, Calciumcarbonat, Bariumcarbonat, Bariumsulfat, Titandioxid, Aluminiumoxid, Aluminiumhydroxid und Zinksulfid. Silikate, Bentonit, Hydroxyapatit und Hydrotalcite seien ebenfalls genannt. Besonders bevorzugt sind auf SiO₂-basierende Kieselsäuren, Magnesiumpyrophosphat und Tricalciumphosphat.

Geeignete auf SiO₂-basierende Pickering-Stabilisatoren sind hochdisperse Kieselsäuren. Sie können als feine, feste Teilchen in Wasser dispergiert werden. Es ist aber auch möglich, sogenannte kolloidale Dispersionen von Kieselsäure in Wasser zu verwenden. Solch kolloidale Dispersionen sind alkalische, wässrige Mischungen von Kieselsäure. Im alkalischen pH-Bereich sind die Partikel gequollen und in Wasser stabil. Für eine Verwendung dieser Dispersionen als Pickering-Stabilisatoren ist es vorteilhaft, wenn der pH-Wert der Öl-in-Wasser-Emulsion mit einer Säure auf pH 2 bis 7 eingestellt wird. Bevorzugte kolloidale Dispersionen von Kieselsäure haben bei pH 9,3 eine spezifische Oberfläche im Bereich von 70 bis 90 m²/g.

Bevorzugt werden als SiO₂-basierende Pickering-Stabilisatoren hochdisperse Kieselsäuren, deren mittleren Teilchengrößen im Bereich von 40 bis 150 nm bei pH-Werten im Bereich von 8 bis 11 liegen. Beispielhaft seien Levasil® 50/50 (H. C. Starck), Köstrosol® 3550 (CWK Bad Köstritz) und Bindzil® 50/80 (Akzo Nobel Chemicals) erwähnt.

Die Polymerisation erfolgt in der Regel in Gegenwart von Radikale bildenden Polymerisationsinitiatoren. Hierfür können alle üblichen Peroxo- und Azoverbindungen in den üblicherweise eingesetzten Mengen, z. B. von 0,1 bis 5 Gew.-%, bezogen auf das Gewicht der zu polymerisierenden Monomere, verwendet werden. Bevorzugt sind solche Polymerisationsinitiatoren, die in der Ölphase oder in den Monomeren löslich sind. Beispiele dafür sind t-Butylperoxyneodecanoat, t-Butylperoxypivalat, t-Amylperoxypivalat, Dilauroylperoxid, t-Amylperoxy-2-ethylhexanoat.

Die Polymerisation der Öl-in-Wasser-Emulsion wird üblicherweise bei 20 bis 100 °C, vorzugsweise bei 40 bis 90 °C, durchgeführt. Üblicherweise wird die Polymerisation bei Normaldruck vorgenommen, kann jedoch auch bei vermindertem oder erhöhtem Druck erfolgen, z. B. im Bereich von 0,5 bis 20 bar. Zweckmäßigerweise geht man so vor, dass man eine Mischung aus Wasser, Schutzkolloid und hydrophoben Materialien, Polymerisationsinitiatoren und Monomeren mit einem schnellaufenden Dispergator auf die gewünschte Tröpfchengröße des hydrophoben Materials emulgiert und die stabile Emulsion unter Rühren auf die Zerfallstemperatur des Polymerisationsinitiators erhitzt. Die Geschwindigkeit der Polymerisation kann dabei durch die Wahl der Temperatur und der Menge des Polymerisationsinitiators in bekannter Weise gesteuert werden. Nach Erreichen der Polymerisationstemperatur setzt man die Polymerisation zweckmäßigerweise noch weitere Zeit, z. B. 2 bis 6 Stunden lang, fort, um den Umsatz der Monomeren zu vervollständigen.

Besonders bevorzugt ist eine Arbeitsweise, bei der man während der Polymerisation die Temperatur des polymerisierenden Reaktionsgemisches kontinuierlich oder periodisch erhöht. Dies geschieht mit Hilfe eines Programms mit ansteigender Temperatur. Die gesamte Polymerisationszeit kann zu diesem Zweck in 2 oder mehr Perioden unterteilt werden. Die erste Polymerisationsperiode ist durch einen langsamen Zerfall des Polymerisationsinitiators gekennzeichnet. In der zweiten Polymerisationsperiode und gegebenenfalls weiteren Polymerisationsperioden wird die Temperatur der Reaktionsmischung erhöht, um den Zerfall der Polymerisationsinitiatoren zu beschleunigen. Die Temperatur kann in einem Schritt oder in mehreren Schritten oder kontinuierlich in linearer oder nichtlinearer Weise erhöht werden. Die Temperaturdifferenz zwischen dem Beginn und dem Ende der Polymerisation kann bis zu 50 °C betragen. Im Allgemeinen beträgt diese Differenz 3 bis 40 °C, vorzugsweise 3 bis 30 °C. Nach beendeter Polymerisation wird die Mikrokapseldispersion auf Raumtemperatur abgekühlt.

Falls die Mikrokapseldispersion längere Zeit gelagert werden soll, kann durch Zugabe von Verdickern, wie Rheovis® AS 1125, Rheovis® AT120, Rheovis® AS 1130 (erhältlich von BASF SE, Deutschland) oder Xanthan, die Suspension stabilisiert und Aufrahmung verhindert werden.

Die nach der vorstehend geschilderten Vorgehensweise erhaltenen Mikrokapseldispersionen können in üblicher Weise sprühgetrocknet werden. Zur Erleichterung der Redispergierung der sprühgetrockneten Mikrokapseln können den Dispersionen vor der Sprühtrocknung gegebenenfalls zusätzliche Mengen an Emulgator und/oder Schutzkolloid zugegeben werden. Die Sprühtrocknung der Mikrokapseldispersion kann in üblicher Weise erfolgen. Im Allgemeinen wird so vorgegangen, dass die Eingangstemperatur des Trocknungsgases, in der Regel Stickstoff oder Luft, im Bereich von 100 bis 200°C, vorzugsweise 120 bis 160°C, und die Ausgangstemperatur des Trocknungsgases im Bereich von 30 bis 90°C, vorzugsweise 60 bis 80°C, liegt. Das Versprühen der wässrigen Mikrokapseldispersion im Trocknungsgasstrom kann beispielsweise mittels Ein- oder Mehrstoffdüsen oder über eine rotierende Scheibe erfolgen. Üblicherweise wird die Mikrokapseldispersion im Bereich von 2 bis 200 bar eingespeist. Vorteilhaft wird eine Einstoffdüse mit Drallerzeuger verwendet. Über die Auswahl des Drallerzeugers können Tropfengröße und Sprühwinkel zusätzlich beeinflusst werden. Beispielsweise kann man Einstoffdüsen der Firma Delavan verwenden, die einen typischen Aufbau bestehend aus Drallkammer, welche den Sprühwinkel beeinflusst, und Lochplatte haben, welche den Durchsatz beeinflusst.

Die Abscheidung der partikelförmigen Mikrokapselzusammensetzung erfolgt normalerweise unter Verwendung von Zyklonen oder Filterabscheidern. Die versprühte wässrige Mikrokapseldispersion und der Trocknungsgasstrom werden vorzugsweise parallel geführt. Bevorzugt wird der Trocknungsgasstrom im Gleichstrom mit der Mikrokapseldispersion von oben in den Turm geblasen.

Als Sprühturm lassen sich beispielsweise Trockner der Firmen Anhydro, Miro oder Nubilosa verwenden, die Turmhöhen von 12 bis 30 Metern und Breiten von 3 bis 8 Metern haben. Der Durchsatz an Trocknungsgas liegt für solche Sprühtürme typischer Weise im Bereich von 20 bis 30 t/h. Der Durchsatz an Mikrokapseldispersion liegt dann in der Regel bei 1 bis 1,5 t/h.

Nach einer Verfahrensvariante ist es möglich, nachgeschaltet an den Trockner, ein Wirbelbett zu schalten, um gegebenenfalls Restfeuchte auszutragen. Verfahren, bei denen an die Sprühtrocknung eine Wirbelbetttrocknung angeschlossen ist, werden bevorzugt, da sie zu einer Mikrokapselzusammensetzung mit einem geringeren Feinanteil führen.

Der erfindungsgemäße mikroverkapselte Polyadditionskatalysator ist geeignet zur Härtung von Additionsharzen, wie z.B. Polyurethan-, Polyurea- oder Epoxysystemen.

Der erfindungsgemäße mikroverkapselte Polyadditionskatalysator ist geeignet zur Verwendung in der Bauindustrie, bevorzugt in Bodenbeschichtungen, Dichtstoffen, Klebstoffen und Abdichtungsmembranen.

Der erfindungsgemäße mikroverkapselte Polyadditionskatalysator ist besonders geeignet zur Katalyse der Umsetzung einer Polyolverbindung mit einer Polyisocyanatverbindung.

Die wichtigsten Polyisocyanatverbindungen sind Isomerengemische und Präpolymere des Diphenylmethandiisocyanats (MDI). Außerdem werden Oligomere bzw. Addukte des Hexamethylendiisocyanats (HDI) und Isophorondiisocyanats (IPDI) sowie Präpolymere des Toluoldiisocyanats (TDI) und des Isophorondiisocyanats (IPDI) genutzt.

Als Reaktionspartner stehen Polyhydroxy-Verbindungen, aber auch aromatische und sterisch gehinderte aliphatische Amine sowie latente Härter zur Verfügung. Letztere werden durch Einwirkung von Feuchtigkeit in reaktionsfähige Produkte überführt. Weiterhin nutzt man bei den klassischen Einkomponenten-Systemen (1K-PUR) die Reaktion der Polyurethan-Präpolymere mit Feuchtigkeit zur Polymerbildung.

Der erfindungsgemäße mikroverkapselte Polyadditionskatalysator eignet sich auch zur Verwendung mit Polyol-Dispersionen. Dabei ist es möglich, einen breiten Schichtdickenbereich abzudecken. Für hohe Schichtdicken werden in der Regel Zement und/oder gelöschter Kalk mitverwendet (so genannte 3K-Systeme), um das unter der Einwirkung von Wasser entstehende Kohlendioxid abzufangen. Derartige Beschichtungen zeichnen sich durch extrem hohe Chemikalienbeständigkeit aus.

Der erfindungsgemäße mikroverkapselte Polyadditionskatalysator kann der Polyisocyanatverbindung beigemischt werden. Alternativ kann der erfindungsgemäße mikroverkapselte Polyadditionskatalysator zum Zeitpunkt der Anwendung mit den Komponenten des Harzsystems vermischt werden. In einer bevorzugten Ausführungsform wird der erfindungsgemäße mikroverkapselte Polyadditionskatalysator dem Zuschlag- oder Füllstoffsystem beigemischt. Das Zuschlag- oder Füllstoffsystem liegt in der Regel pulverförmig vor und wird zum Zeitpunkt der Anwendung mit den flüssigen Komponenten des Harzsystems vermischt.

Der erfindungsgemäße mikroverkapselte Polyadditionskatalysator gestattet die Einstellung einer ausreichend langen Topfzeit und einer kurzen Aushärtezeit.

Die Erfindung wird durch die nachfolgenden Beispiele näher veranschaulicht.

Die Partikelgrößenverteilung der Mikrokapseln wurde mit einem Malvern Mastersizer 2000, Probendispersionseinheit Hydro 2000S unter Standardmessmethoden gemessen, die in der Literatur dokumentiert sind. Der angegebene Wert ist der Durchschnittswert, d.h. D(0,5).

Zur Gefriertrocknung wurden die Proben in einer 25 mm tiefen Metallschale auf Trockeneis eingefroren. Die Trocknung erfolgt bei 1,013 mbar in einem Gefriertrockner, Fa. Christ Modell Alpha 2-4, Temperatursteuerung LDC-1M. Die Probentemperatur wurde auf-20 °C geregelt. Die Temperatur des Eiskondensators war <-60 °C. Der Trocknungsprozess wurde beendet, wenn sowohl die Temperatur der Probe als auch die der Stellfläche <0 °C war. Die Trocknungsdauer ist abhängig von Menge und Material des zu trocknenden Gutes. Nach der Trocknung wird das Gerät mit Raumluft belüftet und die Proben mit Hilfe eines Spatels aus der Form geschabt und abgefüllt.

### Beispiel 1

Wasserphase
463,15 g destilliertes Wasser
150 g einer 10 Gew.-% wässrigen Lösung von Polyvinylalkohol (Mowiol 18/88 von Kuraray Europe GmbH, Viskosität einer 4 Gew.-% Lösung bei 20 °C: 18 mPas gemessen nach DIN 53015, und einem Hydrolysegrad von 88%)
2 g einer 2,5 Gew.-% wässrigen Lösung von Natriumnitrit
0,12 g einer 25 Gew.-% wässrigen Lösung von Natronlauge
Zulauf 1
200 g Dibutylzinndilaurat
200 g Diisononylcyclohexan-1,2-dicarboxylat
Zulauf 2
10 g 1,4-Butandioldiacrylat
50 g Methylmethacrylat
40 g Methacrylsäureanhydrid
Zulauf 3
2,05 g tert.-Butylperoxyneodecanoat
Zulauf 4
10 g einer 10 Gew.-% wässrigen Lösung von tert.-Butylhydroperoxid
Zulauf 5
26 g einer 3,85 Gew.-% wässrigen Lösung von Ascorbinsäure

Die Wasserphase wurde bei 25 °C in ein Vorlagegefäß gegeben. Zulauf 1 und Zulauf 2 wurden zugegeben und die Mischung 40 Minuten lang bei 3500 rpm gerührt. Dies gab eine stabile Emulsion. Nach der Zugabe von Zulauf 3 wurde folgendes Temperaturprogramm gefahren: Heizen auf 75 °C in 180 Minuten, Halten dieser Temperatur für 60 Minuten. Hiernach wurde Zulauf 4 hinzugegeben, und im Rahmen der Abkühlung auf 20 °C wurde Zulauf 5 über einen Zeitraum von 60 Minuten zugegeben.

Es wurde eine Dispersion mit einem Feststoffgehalt von 45,2 Gew.-% mit einer mittleren Partikelgröße D(0,5) von 2,54 µm erhalten. Anschließend wurde die Dispersion gefriergetrocknet, um das Wasser zu entfernen. Hierbei wurde ein farbloses Pulver erhalten.

### Beispiel 2

Beispiel 1 wurde wiederholt, wobei jedoch die Mengen der nachstehenden Komponenten wie folgt abgeändert wurden:
70 g Methylmethacrylat
20 g Methacrylsäureanhydrid

Es wurde eine Dispersion mit einem Feststoffgehalt von 44,8 Gew.-% mit einer mittleren Partikelgröße D(0,5) von 2,25 µm erhalten. Anschließend wurde die Dispersion gefriergetrocknet, um das Wasser zu entfernen. Hierbei wurde ein farbloses Pulver erhalten.

### Beispiel 3

Wasserphase
570,7 g destilliertes Wasser
150 g einer 50 Gew.-% wässrigen Lösung eines Silica Sols mit einer spezifischen Oberfläche von ca. 80 m²/g
7 g einer 5 Gew.-% wässrigen Lösung von Methylhydroxypropylcellulose mit einem durchschnittlichen Molekulargewicht von 26 000 g/mol
2 g einer 2,5 Gew.-% wässrigen Lösung von Natriumnitrit
3,85 g einer 20 Gew.-% wässrigen Lösung von Salpetersäure
Zulauf 1
200 g Dibutylzinndilaurat
200 g Diisononylcyclohexan-1,2-dicarboxylat
Zulauf 2
10 g 1,4-Butandioldiacrylat
50 g Methylmethacrylat
40 g Methacrylsäureanhydrid
Zulauf 3
1,35 g einer 75 Gew.-% Lösung von tert-Butylperpivalat in aliphatischen Kohlenwasserstoffen
Zulauf 4
50 g einer 2 Gew.-% wässrigen Lösung von Natriumperoxodisulfat
Zulauf 5
14,4 g einer 10 Gew.-% wässrigen Lösung von Natriumhydroxid

Die Wasserphase wurde bei 25 °C in ein Vorlagegefäß gegeben. Zulauf 1 und Zulauf 2 wurden zugegeben und die Mischung 40 Minuten lang bei 3500 rpm gerührt. Dies gab eine stabile Emulsion. Nach der Zugabe von Zulauf 3 wurde folgendes Temperaturprogramm gefahren: Heizen auf 65 °C in 60 Minuten, Heizen auf 90 °C in 60 Minuten, Halten dieser Temperatur für 150 Minuten. In den ersten 90 Minuten dieses Zeitraums wurde Zulauf 4 zugegeben. Nach Abkühlung auf 20 °C wurde Zulauf 5 zugegeben.

Es wurde eine Dispersion mit einem Feststoffgehalt von 44,6 Gew.-% mit einer mittleren Partikelgröße D(0,5) von 4,00 µm erhalten. Anschließend wurde die Dispersion gefriergetrocknet, um das Wasser zu entfernen. Hierbei wurde ein farbloses Pulver erhalten.

### Beispiel 4

Beispiel 3 wurde wiederholt, wobei jedoch die Mengen der nachstehenden Komponenten wie folgt abgeändert wurden:
70 g Methylmethacrylat
20 g Methacrylsäureanhydrid
0,73 g Natriumhydroxid
Es wurde eine Dispersion mit einem Feststoffgehalt von 44,7 Gew.-% mit einer mittleren Partikelgröße D(0,5) von 4,16 µm erhalten. Anschließend wurde die Dispersion gefriergetrocknet, um das Wasser zu entfernen. Hierbei wurde ein farbloses Pulver erhalten.

### Beispiel 5

Wasserphase
570,7 g destilliertes Wasser
150 g einer 50 Gew.-% wässrigen Lösung eines Silica Sols mit einer spezifischen Oberfläche von ca. 80 m²/g
7 g einer 5 Gew.-% wässrigen Lösung von Methylhydroxypropylcellulose mit einem durchschnittlichen Molekulargewicht von 26 000 g/mol
2 g einer 2,5 Gew.-% wässrigen Lösung von Natriumnitrit
3,85 g einer 20 Gew.-% wässrigen Lösung von Salpetersäure
Zulauf 1
200 g Bismutneodecanoat
200 g Diisononylcyclohexan-1,2-dicarboxylat
Zulauf 2
10 g 1,4-Butandioldiacrylat
70 g Methylmethacrylat
20 g Methacrylsäureanhydrid
Zulauf 3
1,35 g einer 75 Gew.-% Lösung von tert-Butylperpivalat in aliphatischen Kohlenwasserstoffen
Zulauf 4
50 g einer 2 Gew.-% wässrigen Lösung von Natriumperoxodisulfat
Zulauf 5
0,73 g einer 10 Gew.-% wässrigen Lösung von Natriumhydroxid

Das Verfahren war identisch zu dem in Versuch 4 erwähnten. Es wurde eine Dispersion mit einem Feststoffgehalt von 42,5 Gew.-% mit einer mittleren Partikelgröße D(0,5) von 3,64 µm erhalten. Anschließend wurde die Dispersion gefriergetrocknet, um das Wasser zu entfernen. Hierbei wurde ein farbloses Pulver erhalten.

Die Beispiele 1 bis 5 wurden mit der folgenden Prozedur getestet:
Testsystem: Ein Masterbatch wurde aus 91 g (0,5 mol NCO) Desmodur N3600 (HDI-Trimer) und 124 g (0,55 mol OH) Lupranol 1200 (Polypropylenglycol mit einem zahlenmittleren Molekulargewicht von 450) bereitet; es wurden 0,15 g Katalysator bzw. eine Menge Mikrokapseln, deren Katalysatorgehalt der freien Katalysatormenge entspricht, auf 15 g Masterbatch eingesetzt, was der Beladung von 1% (w/w) Katalysator entspricht.

Messung:
1) Einwiegen geeigneter Mengen des Katalysators in Schnappdeckelgläser mit einem Rührfisch
2) Herstellung des Masterbatches durch Mischung der Komponenten Desmodur N3600 von Bayer Material Science und Lupranol 1200 von BASF unter einem langsamen Stickstofffluss über 5 Minuten und 400 rpm.
3) Einfüllen der Mischung in Probengläschen und Rühren mit einem Rührfisch
4) Topfzeit ("Potlife"): Wenn Rührfisch steckenbleibt
5) Aushärtezeit ("Curing time"): Nachdem sich die Oberfläche des Harzes bei Kippen des Glases nicht mehr bewegte, wurde die endgültige Aushärtezeit bestimmt, sobald sich das gehärtete Harz nicht mehr mit einem Spatel eindrücken ließ.

Testergebnis:

| | Topfzeit / min | Aushärtezeit / min |
|---|---|---|
| Kein Katalysator | 2880 | 3000 |
| Reiner Katalysator Dibutylzinndilaurat | 10 | 16 |
| Beispiel 1 | 75 | 165 |
| Beispiel 2 | 270 | 1080 |
| Beispiel 3 | 40 | 75 |
| Beispiel 4 | 90 | 270 |
| Reiner Katalysator Bismutneodecanoat | 1 | 1,2 |
| Beispiel 5 | 180 | 265 |

## Patentansprüche

1. Mikroverkapselter Polyadditionskatalysator, umfassend einen Polyadditionskatalysator enthaltenden Kapselkern und ein Acrylcopolymer als Kapselhülle, wobei das Acrylcopolymer einpolymerisierte Einheiten eines intermolekularen Anhydrids einer ethylenisch ungesättigten C₃-C₁₂-Carbonsäure enthält und der Polyadditionskatalysator ausgewählt ist unter acyclischen tertiären Aminen, alicyclischen tertiären Aminen, N-Alkylimidazolen, Phosphinen und organischen Metallsalzen.

2. Mikroverkapselter Polyadditionskatalysator nach Anspruch 1, wobei das intermolekulare Anhydrid der ethylenisch ungesättigten C₃-C₁₂-Carbonsäure ausgewählt ist unter Acrylsäureanhydrid, Methacrylsäureanhydrid und 4-Vinylbenzoesäureanhydrid.

3. Mikroverkapselter Polyadditionskatalysator nach Anspruch 1 oder 2, wobei das Acrylcopolymer aufgebaut ist aus Einheiten von
(a) 5 bis 50 Gew.-% wenigstens eines intermolekularen Anhydrids einer ethylenisch ungesättigten C₃-C₁₂-Carbonsäure,
(b) 30 bis 90 Gew.-% wenigstens eines unter C₁-C₂₄-Alkylestern der Acrylsäure, C₁-C₂₄-Alkylestern der Methacrylsäure und Vinylaromaten ausgewählten Monomers,
(c) 5 bis 20 Gew.-% wenigstens eines Monomers, das wenigstens zwei ethylenische Unsättigungen aufweist, und
(d) 0 bis 30 Gew.-% eines oder mehrerer sonstiger Monomere, jeweils bezogen auf das Gesamtgewicht der Monomere.

4. Mikroverkapselter Polyadditionskatalysator nach einem der vorhergehenden Ansprüche, wobei
das acyclische tertiäre Amin ausgewählt ist unter Triethylamin, Tributylamin, N,N-Dimethylcyclohexylamin (DMCHA), N-Methyldicyclohexylamin, N,N-Dimethylbenzylamin (BDMA), N,N-Dimethylaminopropylamin, Bis-(dimethylaminopropyl)amin, N,N-Dimethylaminopropyl-N'-methylethanolamin, Dimethylaminoethoxyethanol, Bis-(dimethylaminopropyl)amino-2-propanol, N,N-Dimethylaminopropyl-dipropanolamin, N,N,N'-Trimethyl-N'-hydroxyethyl-bisaminoethyl-ether, N,N-Dimethylaminopropylharnstoff, N,N,N',N'-Tetramethylethylendiamin, N,N,N',N'-Tetramethylbutylendiamin, N,N,N',N'-Tetramethyl-1,6-hexylendiamin, N,N,N',N",N"-Pentamethyldiethylentriamin (PMDETA), N,N,N',N",N"-Pentamethyldipropylentriamin (PMDPTA), N,N,N-Tris-(3-dimethylaminopropyl)-amin, Bis-(2-dimethylaminoethyl)-ether (BDMAEE), Bis-(dimethylaminopropyl)-harnstoff, 2,4,6-Tris(dimethylaminomethyl)phenol, sowie dessen Salz mit 2-Ethylhexansäure und deren Isomeren, 1,3,5-Tris(3-[dimethylamino]propyl)-hexahydro-triazin;
das alicyclische tertiäre Amin ausgewählt ist unter 1,4-Dimethylpiperazin (DMP), 1-Methyl-4-(2-dimethylaminoethyl)piperazin, 1-Aza-bicyclo-[3.3.0]-octan, 1,4-Diaza-bicyclo-[2.2.2]-octan (DABCO), 1,8-Diazabicyclo[5.4.0]undec-7-en (DBU), 1,5-Diazabicyclo[4.3.0]non-7-en (DBN), N-Methylmorpholin, N-Ethylmorpholin, N-Cyclohexylmorpholin und 2,2'-Dimorpholinodiethylether (DMDEE);
das N-Alkylimidazol ausgewählt ist unter N-Methylimidazol, 1,2-Dimethylimidazol, N-(2-Hydroxypropyl)-imidazol, N-(2-Hydroxyethyl)-imidazol und
N-(2-Aminopropyl)-imidazol.

5. Mikroverkapselter Polyadditionskatalysator nach einem der vorhergehenden Ansprüche, wobei das organische Metallsalz die allgemeine Formel
LₘMⁿ⁺ nA⁻
aufweist, worin
der Ligand L ein organischer Rest oder eine organische Verbindung ist ausgewählt unter Alkyl, Alkenyl, Alkinyl, Aryl, Arylalkyl, Alkylaryl, Heteroaryl, Heteroarylalkyl, Alkylheteroaryl und Acyl, wobei der Ligand L 1 bis 20 C-Atome aufweist, und wobei die m Liganden L gleich oder verschieden sein können,
m gleich 0, 1, 2, 3, 4, 5 oder 6 ist,
M für ein Metall steht,
n gleich 1, 2, 3 oder 4 ist, und
das Anion A⁻ für ein Carboxylat-Ion, Alkoxylat-Ion oder Enolat-Ion steht.

6. Mikroverkapselter Polyadditionskatalysator nach Anspruch 5, wobei das Metall M ausgewählt ist unter Lithium, Kalium, Cäsium, Magnesium, Calcium, Strontium, Barium, Bor, Aluminium, Indium, Zinn, Blei, Bismut, Cer, Cobalt, Eisen, Kupfer, Lanthan, Mangan, Quecksilber, Scandium, Titan, Zink und Zirkonium.

7. Mikroverkapselter Polyadditionskatalysator nach Anspruch 5 oder 6, wobei das Anion A⁻ ein Carboxylat-Ion der Formel R¹-COO⁻ ist, wobei R¹ ausgewählt ist unter H, Alkyl, Alkenyl, Alkinyl, Aryl, Arylalkyl, Alkylaryl, Heteroaryl, Heteroarylalkyl, Alkylheteroaryl und Acyl, und wobei der Rest R¹ bis zu 20 C-Atome aufweist.

8. Mikroverkapselter Polyadditionskatalysator nach Anspruch 5 oder 6, wobei das Anion A⁻ ein Enolat-Ion der Formel R²CH=CR³-O⁻ ist, wobei R² und R³ jeweils ausgewählt sind unter H, Alkyl, Alkenyl, Alkinyl, Aryl, Arylalkyl, Alkylaryl, Heteroaryl, Heteroarylalkyl, Alkylheteroaryl und Acyl, und wobei die Reste R² und R³ jeweils bis zu 20 C-Atome aufweisen.

9. Mikroverkapselter Polyadditionskatalysator nach einem der vorhergehenden Ansprüche, wobei der Kapselkern ein hydrophobes Kernmaterial umfasst.

10. Mikroverkapselter Polyadditionskatalysator nach Anspruch 9, wobei das hydrophobe Kernmaterial ausgewählt ist unter Estern aliphatischer oder aromatischer Polycarbonsäuren, Triglyceriden und Trialkylphosphorsäureestern.

11. Mikroverkapselter Polyadditionskatalysator nach einem der vorhergehenden Ansprüche, wobei der Durchmesser D(0,5) der Mikrokapseln zwischen 1 und 50 µm beträgt.

12. Mikroverkapselter Polyadditionskatalysator nach einem der vorhergehenden Ansprüche, wobei der mikroverkapselte Polyadditionskatalysator als trockenes Pulver, Granulat oder Agglomerat vorliegt.

13. Verfahren zur Herstellung eines mikroverkapselten Polyadditionskatalysators nach einem der vorhergehenden Ansprüche durch radikalische Polymerisation eines die Kapselhülle konstituierenden Monomergemisches in der Ölphase einer stabilen Öl-in-Wasser-Emulsion, wobei die Ölphase einen Polyadditionskatalysator enthält und das Monomergemisch das intermolekulare Anhydrid einer ethylenisch ungesättigten C₃-C₁₂-Carbonsäure enthält.

14. Verfahren nach Anspruch 13, wobei die Öl-in-Wasser-Emulsion durch ein Schutzkolloid und/oder einen Pickering-Stabilisator stabilisiert ist.

15. Verwendung eines mikroverkapselten Polyadditionskatalysators nach einem der Ansprüche 1 bis 12 zur Katalyse der Umsetzung einer Polyolverbindung mit einer Polyisocyanatverbindung.

## Claims

1. Microencapsulated polyaddition catalyst comprising a capsule core, containing polyaddition catalyst, and an acrylic copolymer capsule shell, wherein the acrylic copolymer comprises copolymerized units of an intermolecular anhydride of an ethylenically unsaturated C₃-C₁₂ carboxylic acid, and the polyaddition catalyst is selected from acyclic tertiary amines, alicyclic tertiary amines, N-alkylimidazoles, phosphines and organic metal salts.

2. Microencapsulated polyaddition catalyst according to Claim 1, wherein the intermolecular anhydride of the ethylenically unsaturated C₃-C₁₂ carboxylic acid is selected from acrylic anhydride, methacrylic anhydride and 4-vinylbenzoic anhydride.

3. Microencapsulated polyaddition catalyst according to Claim 1 or 2, wherein the acrylic copolymer is constructed of units of
(a) 5 to 50 wt% of at least one intermolecular anhydride of an ethylenically unsaturated C₃-C₁₂ carboxylic acid,
(b) 30 to 90 wt% of at least one monomer selected from C₁-C₂₄ alkyl esters of acrylic acid, C₁-C₂₄ alkyl esters of methacrylic acid and vinylaromatics,
(c) 5 to 20 wt% of at least one monomer which has at least two ethylenic unsaturations, and
(d) 0 to 30 wt% of one or more other monomers, based in each case on the total weight of the monomers.

4. Microencapsulated polyaddition catalyst according to any of the preceding claims, wherein
the acyclic tertiary amine is selected from triethylamine, tributylamine, N,N-dimethyl-cyclohexylamine (DMCHA), N-methyldicyclohexylamine, N,N-dimethylbenzylamine (BDMA), N,N-dimethylaminopropylamine, bis(dimethylaminopropyl)amine, N,N-dimethylaminopropyl-N'-methylethanolamine, dimethylaminoethoxyethanol, bis(dimethylaminopropyl)amino-2-propanol, N,N-dimethylaminopropyldipropanolamine, N,N,N'-trimethyl-N'-hydroxyethyl bisaminoethyl ether, N,N-dimethylaminopropylurea, N,N,N',N'-tetramethylethylenediamine, N,N,N',N'-tetramethylbutylenediamine, N,N,N',N'-tetramethyl-1,6-hexylenediamine, N,N,N',N",N"-pentamethyldiethylenetriamine (PMDETA), N,N,N',N",N"-pentamethyldipropylenetriamine (PMDPTA), N,N,N-tris(3-dimethylaminopropyl)amine, bis(2-dimethylaminoethyl) ether (BDMAEE), bis(dimethylaminopropyl)urea, 2,4,6-tris(dimethylaminomethyl)phenol, and also its salt with 2-ethylhexanoic acid and isomers thereof, 1,3,5-tris(3-[dimethylamino]propyl)-hexahydrotriazine;
the alicyclic tertiary amine is selected from 1,4-dimethylpiperazine (DMP), 1-methyl-4-(2-dimethylaminoethyl)piperazine, 1-azabicyclo[3.3.0]octane, 1,4-diazabicyclo[2.2.2]-octane (DABCO), 1,8-diazabicyclo[5.4.0]undec-7-ene (DBU), 1,5-diazabicyclo[4.3.0]non-7-ene (DBN), N-methylmorpholine, N-ethylmorpholine, N-cyclohexylmorpholine and 2,2'-dimorpholinodiethyl ether (DMDEE);
the N-alkylimidazole is selected from N-methylimidazole, 1,2-dimethylimidazole, N-(2-hydroxypropyl)imidazole, N-(2-hydroxyethyl)imidazole and N-(2-aminopropyl)-imidazole.

5. Microencapsulated polyaddition catalyst according to any of the preceding claims, wherein the organic metal salt has the general formula
LₘMⁿ⁺ n A⁻
in which
the ligand L is an organic radical or an organic compound selected from alkyl, alkenyl, alkynyl, aryl, arylalkyl, alkylaryl, heteroaryl, heteroarylalkyl, alkylheteroaryl and acyl, the ligand L having 1 to 20 C atoms, and the m ligands L being either identical or different,
m is 0, 1, 2, 3, 4, 5 or 6,
M is a metal,
n is 1, 2, 3 or 4, and
the anion A⁻ is a carboxylate ion, alkoxylate ion or enolate ion.

6. Microencapsulated polyaddition catalyst according to Claim 5, wherein the metal M is selected from lithium, potassium, cesium, magnesium, calcium, strontium, barium, boron, aluminum, indium, tin, lead, bismuth, cerium, cobalt, iron, copper, lanthanum, manganese, mercury, scandium, titanium, zinc and zirconium.

7. Microencapsulated polyaddition catalyst according to Claim 5 or 6, wherein the anion A⁻ is a carboxylate ion of the formula R¹-COO⁻, where R¹ is selected from H, alkyl, alkenyl, alkynyl, aryl, arylalkyl, alkylaryl, heteroaryl, heteroarylalkyl, alkylheteroaryl and acyl, and where the radical R¹ has up to 20 C atoms.

8. Microencapsulated polyaddition catalyst according to Claim 5 or 6, wherein the anion A⁻ is an enolate ion of the formula R²CH=CR³-O⁻, where R² and R³ are each selected from H, alkyl, alkenyl, alkynyl, aryl, arylalkyl, alkylaryl, heteroaryl, heteroarylalkyl, alkylheteroaryl and acyl, and where the radicals R² and R³ each have up to 20 C atoms.

9. Microencapsulated polyaddition catalyst according to any of the preceding claims, wherein the capsule core comprises a hydrophobic core material.

10. Microencapsulated polyaddition catalyst according to Claim 9, wherein the hydrophobic core material is selected from esters of aliphatic or aromatic polycarboxylic acids, triglycerides and trialkylphosphoric esters.

11. Microencapsulated polyaddition catalyst according to any of the preceding claims, wherein the diameter D(0,5) of the microcapsules is between 1 and 50 µm.

12. Microencapsulated polyaddition catalyst according to any of the preceding claims, wherein the microencapsulated polyaddition catalyst takes the form of a dry powder, granules or agglomerate.

13. Method for producing a microencapsulated polyaddition catalyst according to any of the preceding claims by radical polymerization of a monomer mixture constituting the capsule shell in the oil phase of a stable oil-in-water emulsion, wherein the oil phase contains a polyaddition catalyst, and the monomer mixture contains the intermolecular anhydride of an ethylenically unsaturated C₃-C₁₂ carboxylic acid.

14. Method according to Claim 13, wherein the oil-in-water emulsion is stabilized by a protective colloid and/or a Pickering stabilizer.

15. Use of a microencapsulated polyaddition catalyst according to any of Claims 1 to 12 for catalyzing the reaction of a polyol compound with a polyisocyanate compound.

## Revendications

1. Catalyseur de polyaddition microencapsulé, comprenant un noyau de capsule contenant un catalyseur de polyaddition et un copolymère acrylique en tant qu'enveloppe de capsule, le copolymère acrylique contenant des motifs polymérisés d'un anhydride intermoléculaire d'un acide carboxylique éthyléniquement insaturé en C₃₋₁₂ et le catalyseur de polyaddition étant choisi parmi des amines tertiaires acycliques, des amines tertiaires alicycliques, des N-alkylimidazoles, des phosphines et des sels organométalliques.

2. Catalyseur de polyaddition microencapsulé selon la revendication 1, l'anhydride intermoléculaire de l'acide carboxylique éthyléniquement insaturé en C₃₋₁₂ étant choisi parmi l'anhydride d'acide acrylique, l'anhydride d'acide méthacrylique et l'anhydride d'acide 4-vinylbenzoïque.

3. Catalyseur de polyaddition microencapsulé selon la revendication 1 ou 2, le copolymère acrylique étant construit à partir de motifs de
(a) 5 à 50 % en poids d'au moins un anhydride intermoléculaire d'un acide carboxylique éthyléniquement insaturé en C₃₋₁₂,
(b) 30 à 90 % en poids d'au moins un monomère choisi parmi des esters d'alkyle de C₁₋₂₄ d'acide acrylique, des esters d'alkyle de C₁₋₂₄ d'acide méthacrylique et des composés vinylaromatiques,
(c) 5 à 20 % en poids d'au moins un monomère qui présente au moins deux insaturations éthyléniques, et
(d) 0 à 30 % en poids d'un ou plusieurs monomères supplémentaires, à chaque fois par rapport au poids total des monomères.

4. Catalyseur de polyaddition microencapsulé selon l'une quelconque des revendications précédentes, l'amine tertiaire acyclique étant choisie parmi la triéthylamine, la tributylamine, la N,N-diméthyl-cyclohexylamine (DMCHA), la N-méthyldicyclohexylamine, la N,N-diméthyl-benzylamine (BDMA), la N,N-diméthylaminopropylamine, la bis(diméthylaminopropyl)aminé, la N,N-diméthylaminopropyl-N'-méthyléthanolamine, le diméthylaminoéthoxyéthanol, le bis(diméthylaminopropyl)amino-2-propanol, la N,N-diméthylaminopropyl-dipropanolamine, le N,N,N'-triméthyl-N'-hydroxyéthyl-bisaminoéthyl-éther, la N,N-diméthylaminopropylurée, la N,N,N',N'-tétraméthyléthylènediamine, la N,N,N',N'-tétraméthylbutylènediamine, la N,N,N',N'-tétraméthyl-1,6-hexylènediamine, la N,N,N',N'',N''-pentaméthyldiéthylènetriamine (PMDETA), la N,N,N',N'',N''-pentaméthyldipropylènetriamine (PMDPTA), la N,N,N-tris(3-diméthylaminopropyl)amine, le bis(2-diméthylaminoéthyl)-éther (BDMAEE), la bis(diméthylaminopropyl)urée, le 2,4,6-tris(diméthylaminométhyl)phénol, ainsi que ses sels avec l'acide 2-éthylhexanoïque et ses isomères, la 1,3,5-tris(3-[diméthylamino]propyl)-hexahydrotriazine ;
l'amine tertiaire alicyclique étant choisie parmi la 1,4-diméthylpipérazine (DMP), la 1-méthyl-4-(2-diméthylaminoéthyl)pipérazine, le 1-azabicyclo[3.3.0]octane, le 1,4-diazabicyclo[2.2.2]octane (DABCO), le 1,8-diazabicyclo[5.4.0]undéc-7-ène (DBU), le 1,5-diazabicyclo[4.3.0]non-7-ène (DBN), la N-méthylmorpholine, la N-éthylmorpholine, la N-cyclohexylmorpholine et le 2,2'-dimorpholino-diéthyléther (DMDEE) ;
le N-alkylimidazole étant choisi parmi le N-méthylimidazole, le 1,2-diméthylimidazole, le N-(2-hydroxypropyl)imidazole, le N-(2-hydroxyéthyl)imidazole et le N-(2-aminopropyl)-imidazole.

5. Catalyseur de polyaddition microencapsulé selon l'une quelconque des revendications précédentes, le sel organométallique présentant la formule générale
LₘMⁿ⁺ nA⁻,
dans laquelle
le ligand L est un radical organique ou un composé organique choisi parmi alkyle, alcényle, alcynyle, aryle, arylalkyle, alkylaryle, hétéroaryle, hétéroarylalkyle, alkylhétéroaryle et acyle, le ligand L présentant 1 à 20 atomes de C, et les m ligands L pouvant être identiques ou différents,
m est égal à 0, 1, 2, 3, 4, 5 ou 6,
M représente un métal,
n est égal à 1, 2, 3 ou 4, et
l'anion A⁻ représente un ion carboxylate, un ion alcoxylate ou un ion énolate.

6. Catalyseur de polyaddition microencapsulé selon la revendication 5, le métal M étant choisi parmi le lithium, le potassium, le césium, le magnésium, le calcium, le strontium, le baryum, le bore, l'aluminium, l'indium, l'étain, le plomb, le bismuth, le cérium, le cobalt, le fer, le cuivre, le lanthane, le manganèse, le mercure, le scandium, le titane, le zinc et le zirconium.

7. Catalyseur de polyaddition microencapsulé selon la revendication 5 ou 6, l'anion A⁻ étant un ion carboxylate de formule R¹-COO⁻, R¹ étant choisi parmi H, alkyle, alcényle, alcynyle, aryle, arylalkyle, alkylaryle, hétéroaryle, hétéroarylalkyle, alkylhétéroaryle et acyle, et le radical R¹ présentant jusqu'à 20 atomes de C.

8. Catalyseur de polyaddition microencapsulé selon la revendication 5 ou 6, l'anion A⁻ étant un ion énolate de formule R²CH=CR³-O⁻, R² et R³ étant à chaque fois choisis parmi H, alkyle, alcényle, alcynyle, aryle, arylalkyle, alkylaryle, hétéroaryle, hétéroarylalkyle, alkylhétéroaryle et acyle, et les radicaux R² et R³ présentant à chaque fois jusqu'à 20 atomes de C.

9. Catalyseur de polyaddition microencapsulé selon l'une quelconque des revendications précédentes, le noyau de capsule comprenant un matériau de noyau hydrophobe.

10. Catalyseur de polyaddition microencapsulé selon la revendication 9, le matériau de noyau hydrophobe étant choisi parmi des esters d'acides polycarboxyliques aliphatiques ou aromatiques, des triglycérides et des esters d'acides trialkylphosphoriques.

11. Catalyseur de polyaddition microencapsulé selon l'une quelconque des revendications précédentes, le diamètre D(0,5) des microcapsules étant compris entre 1 et 50 µm.

12. Catalyseur de polyaddition microencapsulé selon l'une quelconque des revendications précédentes, le catalyseur de polyaddition microencapsulé étant présent en tant que poudre, granulé ou agglomérat sec/sèche.

13. Procédé pour la préparation d'un catalyseur de polyaddition microencapsulé selon l'une quelconque des revendications précédentes par polymérisation radicalaire d'un mélange de monomères constituant l'enveloppe de capsule dans la phase huileuse d'une émulsion stable de type huile-dans-eau, la phase huileuse contenant un catalyseur de polyaddition et le mélange de monomères contenant l'anhydride intermoléculaire d'un acide carboxylique éthyléniquement insaturé en C₃₋₁₂.

14. Procédé selon la revendication 13, l'émulsion huile-dans-eau étant stabilisée par un colloïde protecteur et/ou par un stabilisateur de Pickering.

15. Utilisation d'un catalyseur de polyaddition microencapsulé selon l'une quelconque des revendications 1 à 12 pour la catalyse de la transformation d'un composé de type polyol avec un composé de type polyisocyanate.
